# EUROPEAN PATENT APPLICATION

(11) **EP 4 040 298 A1**
(43) Date of publication of application: **10.08.2022**
(21) Application number: 21204987.8
(22) Date of filing: 27.10.2021
(51) Int. Cl.: G06F 11/34, G06F 11/14

(54) **METHOD OF CALCULATING PREDICTED EXHAUSTION DATE AND PROGRAM OF CALCULATING PREDICTED EXHAUSTION DATE**

(30) Priority: 09.02.2021 JP 2021018863
(71) Applicant: FUJITSU LIMITED, Kawasaki-shi, Kanagawa 211-8588 (JP)
(72) Inventor: Kumano, Tatsuo, Kawasaki-shi, Kanagawa, 211-8588 (JP); Ueno, Hitoshi, Kawasaki-shi, Kanagawa, 211-8588 (JP)
(74) Representative: Hoffmann Eitle

(57) **Abstract**

A method of calculating a predicted exhaustion date for causing a computer to execute a process. The process includes calculating a first predicted exhaustion date when a resource in a system is predicted to be exhausted, at a first time point, calculating a second predicted exhaustion date when the resource is predicted to be exhausted, at a second time point after the first time point, calculating a difference between the first predicted exhaustion date and the second predicted exhaustion date, calculating a third predicted exhaustion date by correcting the second predicted exhaustion date based on the difference, and presenting the third predicted exhaustion date.

## Description

### FIELD

The present invention relates to a method of calculating a predicted exhaustion date and a program of calculating a predicted exhaustion date.

### BACKGROUND

A system built from a plurality of servers may not operate as designed if resources such as a CPU (Central Processing Unit) and a memory in each server are exhausted. Therefore, a system administrator predicts a future exhaustion date when the resources will be exhausted, based on a current resource usage or the like, and add servers before the predicted exhaustion date.

However, the resource usage fluctuates on a daily basis, and it is difficult to determine the predicted exhaustion date of the resource in consideration of the fluctuation. Note that the technique related to the present disclosure is disclosed in Japanese Laid-open Patent Publications No. 2005-182697 and No. 2008-003736.

### SUMMARY

It is an object of the present disclosure to calculate a predicted exhaustion date of a resource in consideration of the fluctuation in resource usage.

According to an aspect of the present disclosure, there is provided a method of calculating a predicted exhaustion date for causing a computer to execute a process, the process including: calculating a first predicted exhaustion date when a resource in a system is predicted to be exhausted, at a first time point; calculating a second predicted exhaustion date when the resource is predicted to be exhausted, at a second time point after the first time point; calculating a difference between the first predicted exhaustion date and the second predicted exhaustion date; calculating a third predicted exhaustion date by correcting the second predicted exhaustion date based on the difference; and presenting the third predicted exhaustion date.

### EFFECT

According to the present disclosure, it is possible to calculate a predicted exhaustion date of a resource in consideration of the fluctuation in resource usage.

### BRIEF DESCRIPTION OF DRAWINGS

FIGs. 1A and 1B are schematic diagrams for explaining a method of automatically calculating a predicted exhaustion date by a computer;
FIG. 2 is a schematic diagram for explaining another method of automatically calculating the predicted exhaustion date by the computer;
FIG. 3 is a block diagram of a system according to a present embodiment;
FIG. 4 is a schematic diagram for illustrating a method of calculating the predicted exhaustion date of a resource;
FIG. 5 is a schematic diagram illustrating a method of limiting the number of first predicted exhaustion dates used for correction to an appropriate number in the present embodiment;
FIG. 6 is a functional block diagram of an information processing device according to the present embodiment;
FIG. 7 is a flowchart illustrating a method of calculating the predicted exhaustion date according to the present embodiment;
FIG. 8A is a schematic diagram illustrating a screen indicative of a preventive warning displayed by the display device according to the present embodiment;
FIG. 8B is a diagram illustrating an example of the text of an email including the preventive warning;
FIG. 9A is a schematic diagram illustrating a screen indicative of a standard warning displayed by the display device according to the present embodiment;
FIG. 9B is a diagram illustrating an example of the text of an email including the standard warning;
FIG. 10A is a schematic diagram illustrating a screen indicative of a final warning displayed by the display device according to the present embodiment;
FIG. 10B is a diagram illustrating an example of the text of an email including the final warning;
FIG. 11 is a diagram illustrating a method of calculating the predicted exhaustion date according to a first variation of the present embodiment;
FIG. 12 is a diagram illustrating a method of calculating the predicted exhaustion date according to a second variation of the present embodiment;
FIG. 13 is a diagram illustrating a method of calculating the predicted exhaustion date according to a third variation of the present embodiment;
FIG. 14 is a diagram illustrating a method of calculating the predicted exhaustion date according to a fourth variation of the present embodiment;
FIG. 15 is a schematic diagram of a screen according to a fifth variation of the present embodiment;
FIG. 16 is a schematic diagram of a screen according to a sixth variation of the present embodiment;

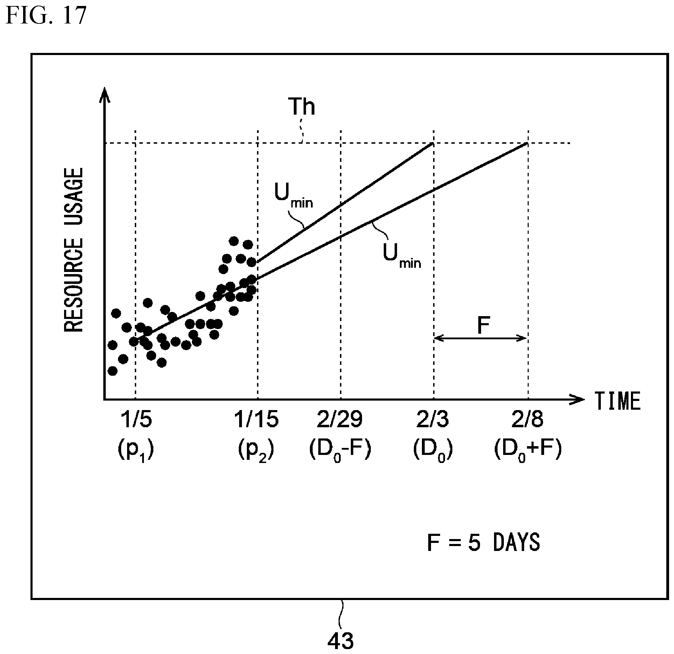

FIG. 17 is a schematic diagram of a screen according to a seventh variation of the present embodiment; and
FIG. 18 is a block diagram illustrating the hardware of the information processing device according to the present embodiment.

### DESCRIPTION OF EMBODIMENTS

Prior to the description of the present embodiment, matters studied by an inventor will be described.

A system such as a charge calculation system may be realized by combining a plurality of application programs executed by a plurality of servers, respectively. In this case, a system administrator needs to calculate the predicted exhaustion date when resources are exhausted in order to prevent the system from not working as designed due to lack of server resources such as a CPU and a memory.

It is difficult for the system administrator to accurately calculate the predicted exhaustion date based on his/her own experience and intuition. Therefore, it is conceivable to automatically calculate the predicted exhaustion date using a computer as follows.

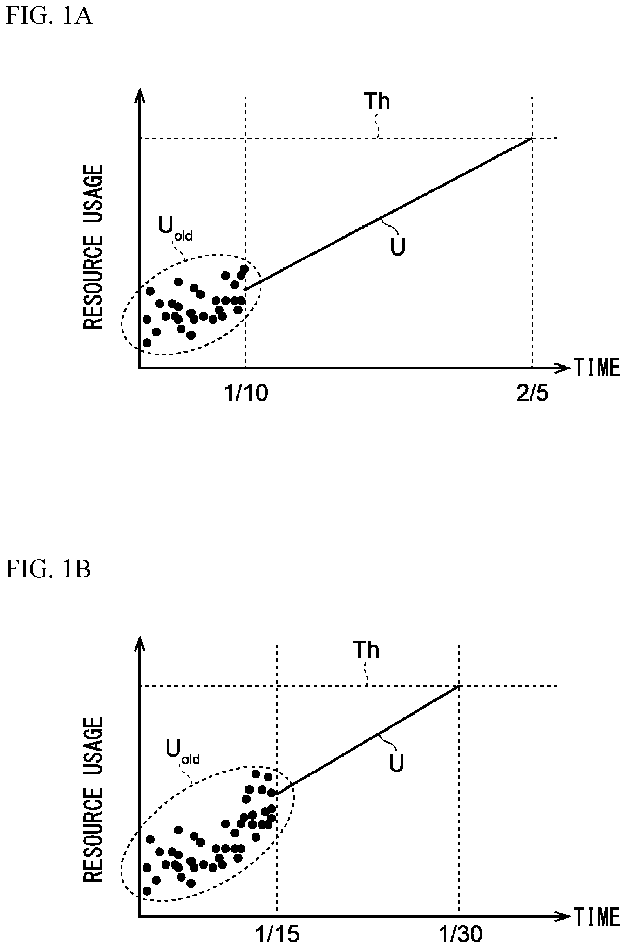

FIGs. 1A and 1B are schematic diagrams for explaining a method of automatically calculating the predicted exhaustion date by a computer.

In FIG. 1A, the predicted exhaustion date is calculated on January 10. FIG. 1A illustrates the method of calculating the predicted exhaustion date based on a past resource usage U_{old} obtained at that time (January 10).

Here, it is assumed that a predicted value U of a future resource usage is calculated from the past resource usage U_{old} by linear regression. The resource usage includes, for example, the usage of the CPU, the memory and a NIC (Network Interface Card) of the server. In addition, the resource usage U_{old} for the past 2 to 4 weeks is used for prediction. Further, in this example, it is assumed that the resource is exhausted when the resource usage exceeds a predetermined threshold value Th. When the resource is the CPU, for example, a CPU usage rate is set as the resource usage, and the threshold Th is set to 90%, for example.

In the example of FIG. 1A, since the predicted value U exceeds the threshold value Th on February 5, the predicted exhaustion date of the resource is February 5. It is considered that the predicted exhaustion date can be calculated more accurately than the prediction based on the experience and intuition of the administrator by using the linear regression in this way.

However, the predicted exhaustion date differs depending on when the prediction is made, as follows.

FIG. 1B is a schematic diagram illustrating the result of calculating the predicted value U on January 15 which is later than the prediction date (January 10) in FIG. 1A. The method of calculating the predicted value U is the same as that in FIG. 1A.

In FIG. 1B, since the predicted value U exceeds the threshold value Th on January 30, the predicted exhaustion date of the resource is January 30. As a result, when the prediction is made on January 15, the predicted exhaustion date comes earlier than when the prediction is made on January 10 (FIG. 1A).

The reason why the predicted exhaustion date differs depending on the prediction date is that the resource usage fluctuates on the daily basis and the predicted exhaustion date is not calculated in consideration of the fluctuation. However, in this case, the administrator cannot know when to add the server in order to prevent the resource shortage, and the administrator may add more servers unnecessarily early or may not add more servers in time.

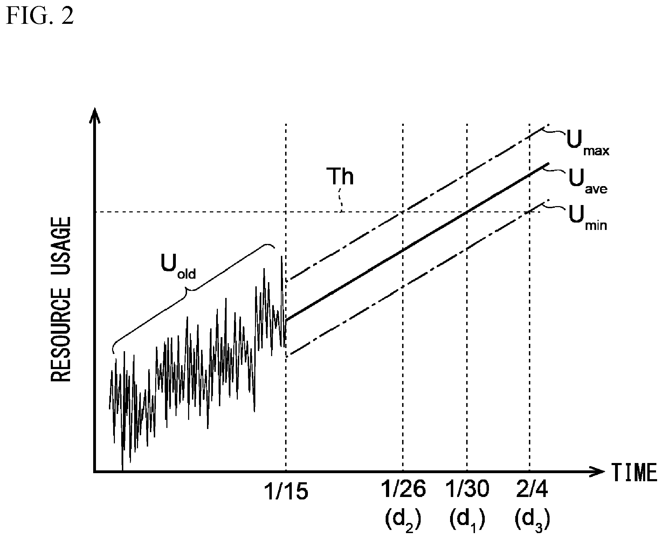

FIG. 2 is a schematic diagram for explaining another method of automatically calculating the predicted exhaustion date by the computer.

In the example of FIG. 2, the predicted value of the resource usage has a range. A maximum value Uₘₐₓ of the range is a value at which the possibility of the resource exhaustion is 10% or more. An average value Uₐᵥₑ of the range is a value at which the possibility of the resource exhaustion is 50% or more. A minimum value Uₘᵢₙ of the range is a value at which the possibility of the resource exhaustion is 90% or more.

In this case, January 26 is a predicted exhaustion date d₂ when the possibility of resource exhaustion is 10%. January 30 is a predicted exhaustion date d₁ when the possibility of resource exhaustion is 50%. February 4 is a predicted exhaustion date d₃ when the possibility of resource exhaustion is 90%.

According to this method, the predicted exhaustion date d₂ in a pessimistic case of the earliest resource exhaustion and the predicted exhaustion date d₃ in an optimistic case of the latest resource exhaustion can be found.

The time required to incorporate a device such as the server into the system after deciding to purchase it is called a lead time. Assuming that the lead time is L, the computer notifies the administrator of warning at the time of d₂ - L or d₃ - L, so that the administrator can purchase the device and incorporate it into the system before the resource is exhausted.

However, even with this method, since the predicted exhaustion dates d1, d2 and d3 are not calculated in consideration of the daily fluctuation of the resource usage, the predicted exhaustion date changes depending on the prediction date as in FIGs. 1A and 1B.

### (Present Embodiment)

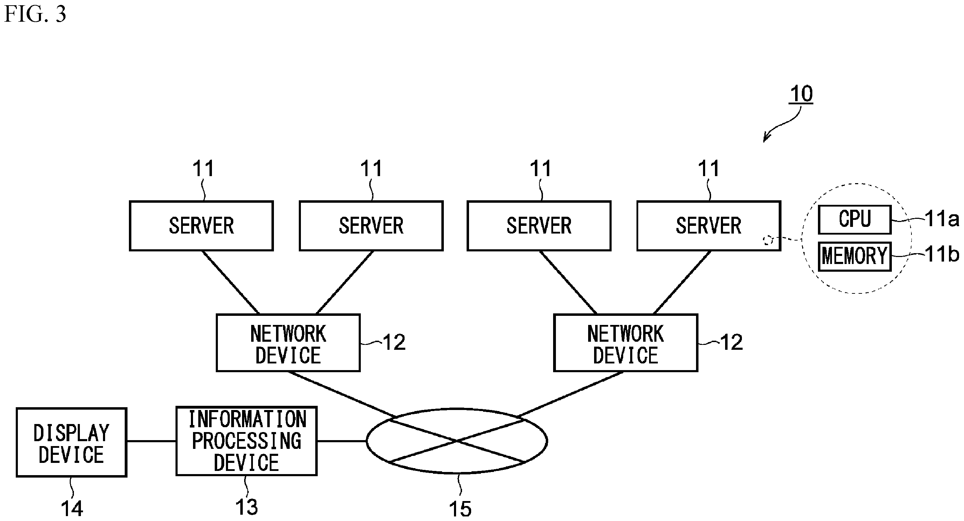

FIG. 3 is the block diagram of the system according to the present embodiment.

A system 10 is a system for calculating usage charges and the like, and includes a plurality of servers 11, a plurality of network devices 12, an information processing device 13, and a display device 14.

Each server 11 is a computer in which a CPU 11a and a memory 11b cooperate to execute an application program such as a charge calculation program. Further, each network device 12 is, for example, a switch that connects the plurality of servers 11 to each other, and is connected to a network 15 such as a LAN (Local Area Network) or an Internet.

The information processing device 13 is the computer such as a PC (Personal Computer) or server that calculates the predicted exhaustion date when the resource in each of the server 11 and the network device 12 is exhausted, and is connected to the server 11 and the network device 12 via the network 15.

Here, the information processing device 13 is provided as a part of the system 10, but the information processing device 13 may be provided outside the system 10. Further, a virtual machine may be started on the server 11, and the virtual machine may have the function of the information processing device 13.

The display device 14 is a display device such as a liquid crystal display that displays the predicted exhaustion date.

Next, a method in which the information processing device 13 calculates the predicted exhaustion date of the resource will be described.

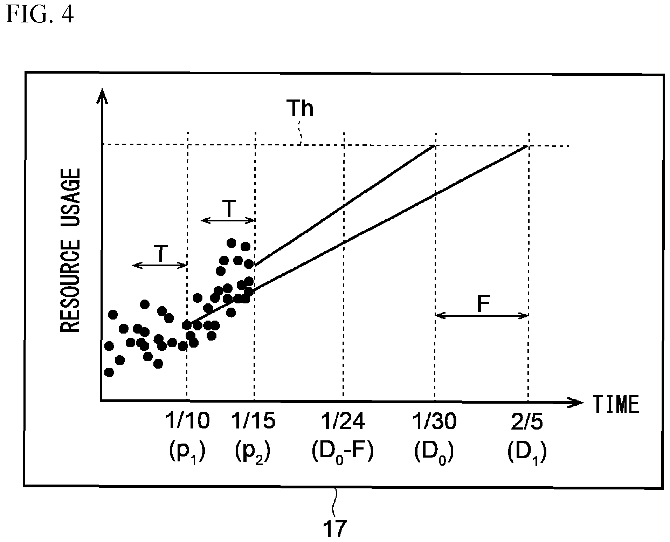

FIG. 4 is a schematic diagram for illustrating a method of calculating the predicted exhaustion date of the resource.

First, the information processing device 13 calculates a first predicted exhaustion date D₁ when the resource exhaustion is predicted, at a first time point p₁. For example, the information processing device 13 calculates the first predicted exhaustion date D₁ based on the past resource usage in a period T having the first time point p₁ as an end point. The algorithm for calculating the first predicted exhaustion date D₁ is not particularly limited. As an example, the information processing device 13 calculates the first predicted exhaustion date D₁ from the past resource usage in the period T by the linear regression. In this example, it is assumed that the first predicted exhaustion date D₁ is February 5.

Next, the information processing device 13 calculates a second predicted exhaustion date Do when the resource exhaustion is predicted, at a second time point p₂ after the first time point p₁. The algorithm for calculating the second predicted exhaustion date Do is the same as the algorithm for calculating the first predicted exhaustion date D₁, and calculates the second predicted exhaustion date Do based on the past resource usage in the period T having the second time point p₂ as the end point.

In this way, even if the same algorithm is used, the resource usage differs between the first time point p₁ and the second time point p₂, so that the second predicted exhaustion date Do is often different from the first predicted exhaustion date D₁. Here, it is assumed that the second predicted exhaustion date Do is January 30, which is earlier than the first predicted exhaustion date D₁.

Next, the information processing device 13 calculates a difference F between the first predicted exhaustion date D₁ and the second predicted exhaustion date Do. In this example, the difference F is 6 days. In the present embodiment, it is considered that the predicted exhaustion date of the resource fluctuates by ±F days from the second predicted exhaustion date Do which is the latest prediction result, due to the daily fluctuation of the resource usage. In particular, in a worst case where the predicted exhaustion date becomes earlier by -F days from the second predicted exhaustion date Do, the administrator of the system 10 does not have enough time to add the server 11 and the network device 12, and it is necessary to notify the administrator of the approach of the predicted exhaustion date as soon as possible.

Therefore, the information processing device 13 calculates a third predicted exhaustion date Do - F when the second predicted exhaustion date Do is corrected based on the difference F. In this example, the third predicted exhaustion date Do - F is January 24.

After that, the information processing device 13 presents each of the first predicted exhaustion date D₁, the second predicted exhaustion date Do and the third predicted exhaustion date Do - F to the administrator. As an example, the information processing device 13 displays a screen 17 including each of the first predicted exhaustion date D₁, the second predicted exhaustion date Do and the third predicted exhaustion date Do - F on the display device 14 (see FIG. 3).

This completes the basic processing of the method for calculating the predicted exhaustion date of the resource according to the present embodiment.

According to this calculation method, the difference F due to the fluctuation of the resource usages at respective time points p₁ and p₂ is calculated, and the third predicted exhaustion date Do - F, where the second predicted exhaustion date Do is corrected based on the difference F, is presented to the administrator. Thereby, the administrator can know the third predicted exhaustion date Do - F that takes into account the daily fluctuation of the resource usage, and the administrator can add the server 11 and the network device 12 before the resource is exhausted.

In the example in FIG. 4, the first time point p₁ is set to a single day in the past before the second time point p₂, but the present embodiment is not limited to this. For example, a plurality of different days in the past prior to the second time point p₂ may be set as the first time points p₁.

In this case, the information processing device 13 calculates a plurality of first predicted exhaustion dates D₁ using the plurality of first time points p₁, respectively. Then, the information processing device 13 calculates a largest value as the above difference F among the plurality of differences between the plurality of first predicted exhaustion dates D₁ and the second predicted exhaustion date Do, and calculates the third predicted exhaustion date Do - F using the difference F and the second predicted exhaustion date Do.

By calculating the first predicted exhaustion date D₁ at each of the plurality of first time points p₁ in this way, a prediction accuracy of the third predicted exhaustion date Do - F can be improved.

However, if the number of predicted exhaustion dates D₁ is increased to some extent, further improvement of the prediction accuracy cannot be expected, and rather the computational resources of the information processing device 13 are consumed unnecessarily. Therefore, it is preferable to limit the number of first predicted exhaustion dates D₁ used for correction to an appropriate number as described below.

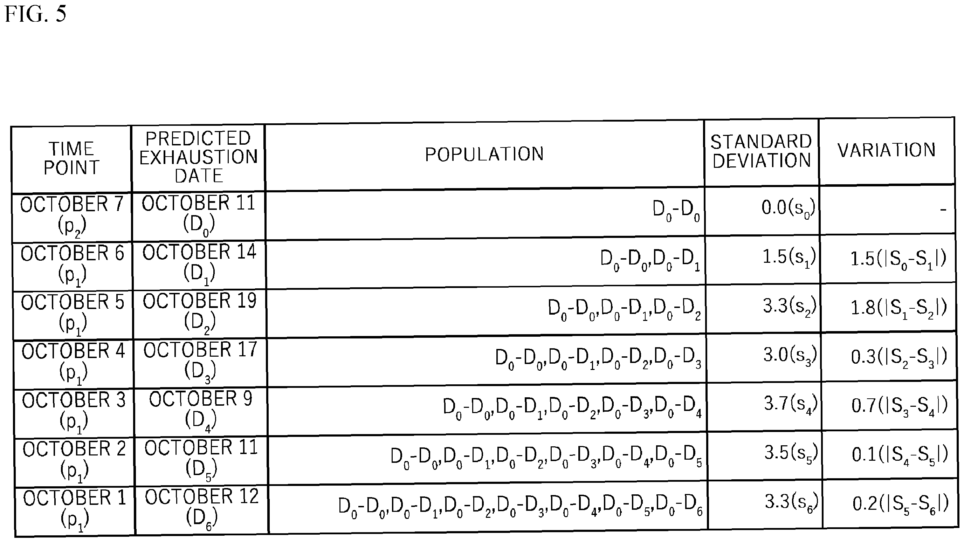

FIG. 5 is a schematic diagram illustrating a method of limiting the number of first predicted exhaustion dates used for correction to the appropriate number.

In the example of FIG. 5, the second time point p₂ is October 7, and the second predicted exhaustion date Do predicted by the information processing device 13 at the second time point p₂ is October 11.

The plurality of first time points p₁ are in the past by 1 to 6 days from the second time point p₂ (October 7), respectively. The first predicted exhaustion dates calculated by the information processing device 13 at these first time points p₁ are represented by D₁ to D₆, respectively.

In this case, the information processing device 13 calculates a standard deviation S₀ of a population having Do - Do as an element for the second predicted exhaustion date Do, and a standard deviation S₁ of the population having Do - Do and Do - D₁ as elements for the first predicted exhaustion date D₁. Further, the information processing device 13 calculates a standard deviation S₂ of the population having Do - Do, Do - D₁ and D₀ - D₂ as elements for the first predicted exhaustion date D₂. Hereinafter, in the same way, the information processing device 13 calculates a standard deviation S₆ of the population having Do - Do, Do - D₁, Do - D₂, ... Do - D₆ as elements for the first predicted exhaustion date D₆.

Next, the information processing device 13 calculates an absolute value (= 1.5) of the difference between the standard deviations S₀ and S₁ as the variation of the first predicted exhaustion date D₁, and an absolute value (= 1.8) of the difference between the standard deviations S₁ and S₂ as the variation of the first predicted exhaustion date D₂. Hereinafter, in the same way, the information processing device 13 calculates an absolute value (= 0.2) of the difference between the standard deviations S₅ and S₆ as the variation of the first predicted exhaustion date D₆.

Then, the information processing device 13 identifies the first predicted exhaustion dates D₁ (October 14) and D₂ (October 19) having the variation larger than a threshold value X (for example, 1 day). Furthermore, the information processing device 13 calculates a maximum difference between each of these first predicted exhaustion dates D₁ and D₂ and the second predicted exhaustion date Do as the difference F, and calculates the above-mentioned third predicted exhaustion date Do - F. Here, the remaining first predicted exhaustion dates D₃ to D₆ are not used to calculate the third predicted exhaustion date Do - F. In this example, the difference F is 8 days, so October 3 is the third predicted exhaustion date.

In this way, by calculating the third predicted exhaustion date Do - F using only the first predicted exhaustion date having the variation larger than the threshold value X, the prediction accuracy of the third predicted exhaustion date Do - F can be maintained while saving the computational resources of the information processing device 13.

Next, the functional configuration of the information processing device 13 according to the present embodiment will be described.

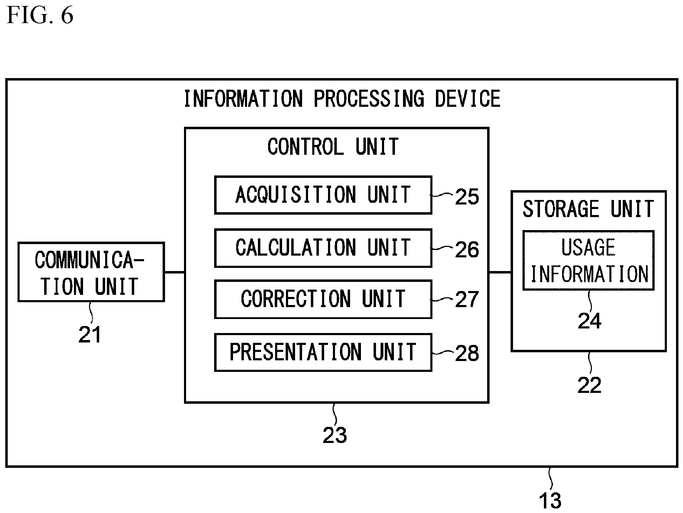

FIG. 6 is the functional block diagram of the information processing device 13 according to the present embodiment.

As illustrated in FIG. 6, the information processing device 13 includes a communication unit 21, a storage unit 22, and a control unit 23.

The communication unit 21 is an interface for connecting the information processing device 13 to the network 15. Further, the storage unit 22 stores the usage information 24 in which the resource usage of the server 11 or the network device 12 is associated with the past date when the resource usage is acquired.

On the other hand, the control unit 23 is a processing unit that controls each unit of the information processing device 13. As an example, the control unit 23 includes an acquisition unit 25, a calculation unit 26, a correction unit 27, and a presentation unit 28.

The acquisition unit 25 is a processing unit that acquires a parameter indicating the resource usage of the system 10. For example, the acquisition unit 25 communicates with each of the server 11 and the network device 12 to acquire parameters indicating these resource usages. Such parameters include the usage rate of the CPU 11a in the server 11 and a memory usage of the memory 11b. Further, the acquisition unit 25 may acquire a disk usage of the server 11 and a traffic passing through the NIC (Network Interface Card) of the server 11 as the parameter. On the other hand, in the network device 12, a traffic through such a network device 12 is such a parameter.

Furthermore, the acquisition unit 25 associates the parameter with a past date when the parameter was acquired, and store it in the storage unit 22 as usage information 24.

The calculation unit 26 calculates the first predicted exhaustion date D₁ in which the resource exhaustion is predicted, at the first time point p₁ before a date indicated by the latest parameter included in the usage information 24. The parameter used for calculating the first predicted exhaustion date D₁ is a parameter included in the period T having the first time point p₁ as the end point. The calculation unit 26 calculates the first predicted exhaustion date D₁ by performing the linear regression on the parameter.

Here, the first time point p₁ is not limited to one. For example, the calculation unit 26 may calculate the first predicted exhaustion dates D₁ to D₆ at the plurality of first time points p₁, respectively, as illustrated in FIG. 5.

Further, the calculation unit 26 calculates the second predicted exhaustion date Do in which the resource exhaustion is predicted, at the second time point p₂ before a date indicated by the latest parameter included in the usage information 24. As an example, the calculation unit 26 calculates the second predicted exhaustion date D₂ by performing the linear regression on the parameter included in the period T having the first time point p₂ as the end point.

Then, the calculation unit 26 calculates the difference F between the first predicted exhaustion date D₁ and the second predicted exhaustion date Do. The calculation unit 26 may calculate the first predicted exhaustion date D₁ at each of the plurality of different first time points p₁. In this case, the calculation unit 26 calculates a largest value among the plurality of differences between the plurality of first predicted exhaustion dates D₁ and the second predicted exhaustion date Do as the difference F.

The correction unit 27 is a processing unit that calculates a third predicted exhaustion date Do - F by correcting the second predicted exhaustion date Do based on the difference F. The correction unit 27 may calculate a fourth predicted exhaustion date Do + F in the optimistic case where the resource is exhausted later than the second predicted exhaustion date Do for the reference of the administrator.

The presentation unit 28 is a processing unit that presents the third predicted exhaustion date Do - F. As an example, the presentation unit 28 outputs an instruction for displaying the third predicted exhaustion date Do - F to the display device 14 (see FIG. 3).

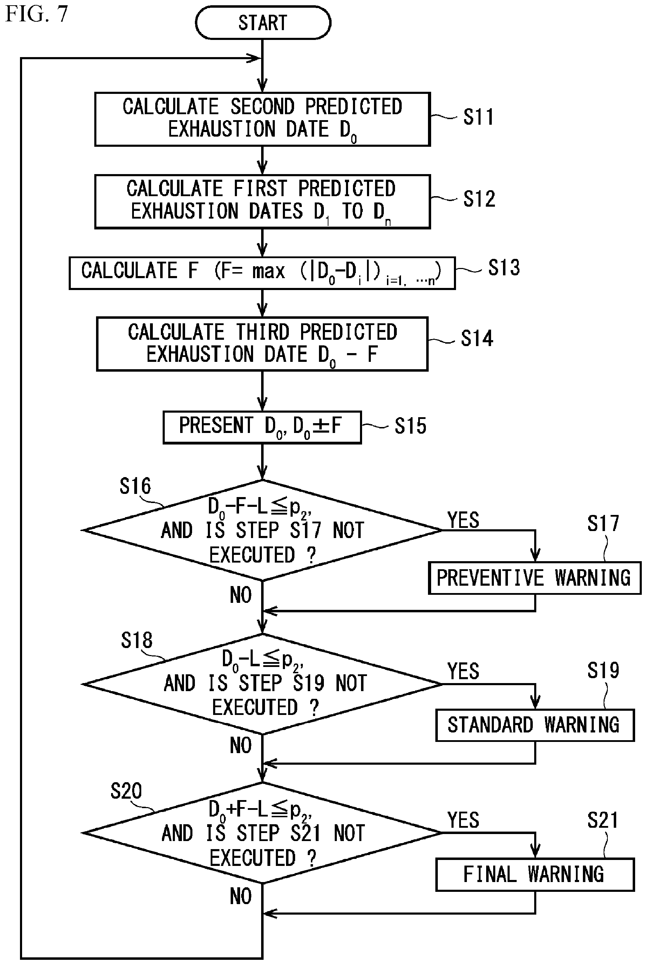

Next, a method of calculating the predicted exhaustion date according to the present embodiment will be described. FIG. 7 is a flowchart illustrating the method of calculating the predicted exhaustion date according to the present embodiment. First, the calculation unit 26 calculates the second predicted exhaustion date Do at the second time point p2 (step S11). Hereinafter, it is assumed that the second time point p₂ is a date indicated by the latest parameter included in the usage information 24 and is a current date.

Next, the calculation unit 26 calculates the first predicted exhaustion dates D₁ to Dₙ at the plurality of first time points p₁ before the second time point p₂, respectively (step S12).

Next, the calculation unit 26 calculates the largest value F among the plurality of differences between the plurality of first predicted exhaustion dates D₁ to Dₙ and the second predicted exhaustion date Do (step S13). As illustrated in FIG. 5, the calculation unit 26 calculates the value F by using only a day in which the variation is larger than the threshold value X among the plurality of first predicted exhaustion days D₁ to Dₙ.

Next, the correction unit 27 calculates the third predicted exhaustion date Do - F (step S14).

Subsequently, the presentation unit 28 outputs an instruction for displaying the third predicted exhaustion date Do - F to the display device 14 (step S15). Also, the presentation unit 28 may output, to the display device 14, an instruction for displaying the second predicted exhaustion date Do and the fourth predicted exhaustion date Do + F in the optimistic case where the resource is exhausted later than the second predicted exhaustion date Do, for the reference of the administrator. The fourth predicted exhaustion date Do + F is the predicted exhaustion date that is expected to fluctuate from the second predicted exhaustion date Do due to the daily fluctuation in a resource amount, as in the third predicted exhaustion date Do - F.

Next, the presentation unit 28 determines whether Do - F - L ≤ p₂ is satisfied and step S17 described later is not executed (step S16). Here, L is a lead time which is set to a value of about 1 to 2 weeks by the administrator. Further, in this example, the second time point p2 is set as the current day, as described above. Therefore, when Do - F - L ≤ p₂ is satisfied, even if the addition of the server 11 and the network device 12 is decided at the current time, the addition will not be in time by the third predicted exhaustion date Do - F.

However, it is assumed that the third predicted exhaustion date Do - F is the worst case where the resource is exhausted earlier than the second predicted exhaustion date Do, so the resource may be exhausted later than the third predicted exhaustion date Do - F in actuality.

Therefore, when Do - F - L ≤ p₂ is satisfied and step S17 is not executed (YES in step S16), the process proceeds to step S17 and the presentation unit 28 outputs an instruction for displaying a preventive warning to the display device 14.

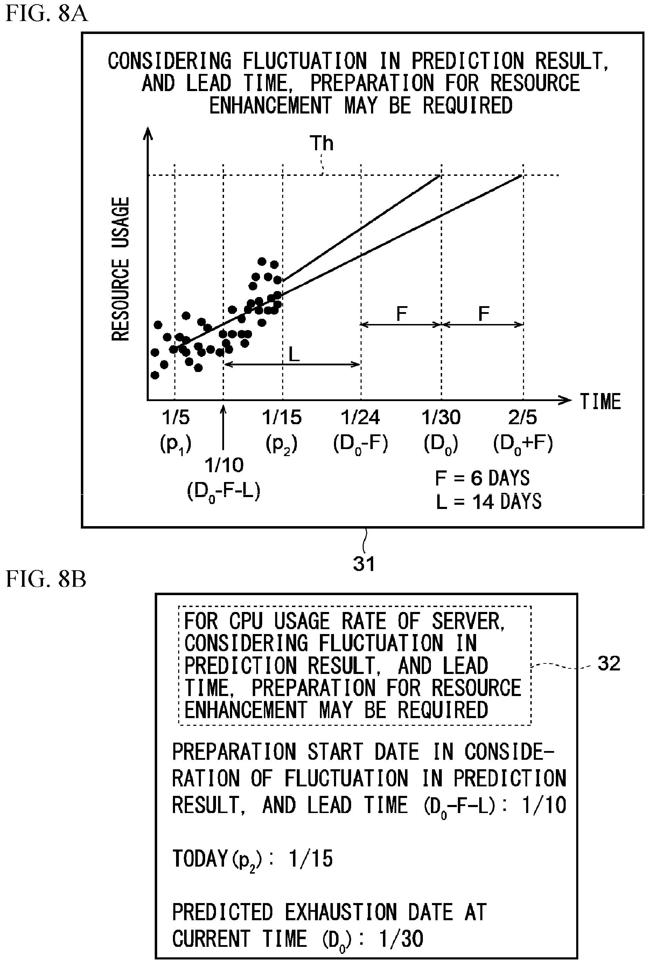

FIG. 8A is a schematic diagram illustrating a screen 31 indicative of the preventive warning displayed by the display device 14.

In the example of FIG. 8A, a message "Considering fluctuation in prediction result, and lead time, preparation for resource enhancement may be required" is displayed on the display device 14 in addition to each of the dates Do, Do - F - L, Do - F and Do + F.

Further, the presentation unit 28 may notify the administrator of an email including the preventive warning. FIG. 8B is a diagram illustrating an example of a text of the email. In the example illustrated in FIG. 8B, a message 32 indicating the preventive warning, and each of the dates p₂, Do and Do - F - L are included in the text of the email.

FIG. 7 is referred to again. On the other hand, when Do - F - L ≤ p₂ is not satisfied or when step S17 was already executed (NO in step S16), the process proceeds to step S18.

In step S18, the presentation unit 28 determines whether Do - L ≤ p₂ is satisfied and step S19 described later is not executed. When Do -L ≤ p₂ is satisfied, even if the addition of the resource is decided at the current time, the addition will not be in time by the second predicted exhaustion date Do.

Therefore, when Do - L ≤ p₂ is satisfied and step S19 is not executed (YES in step S18), the process proceeds to step S19 and the presentation unit 28 outputs an instruction for displaying a standard warning to the display device 14.

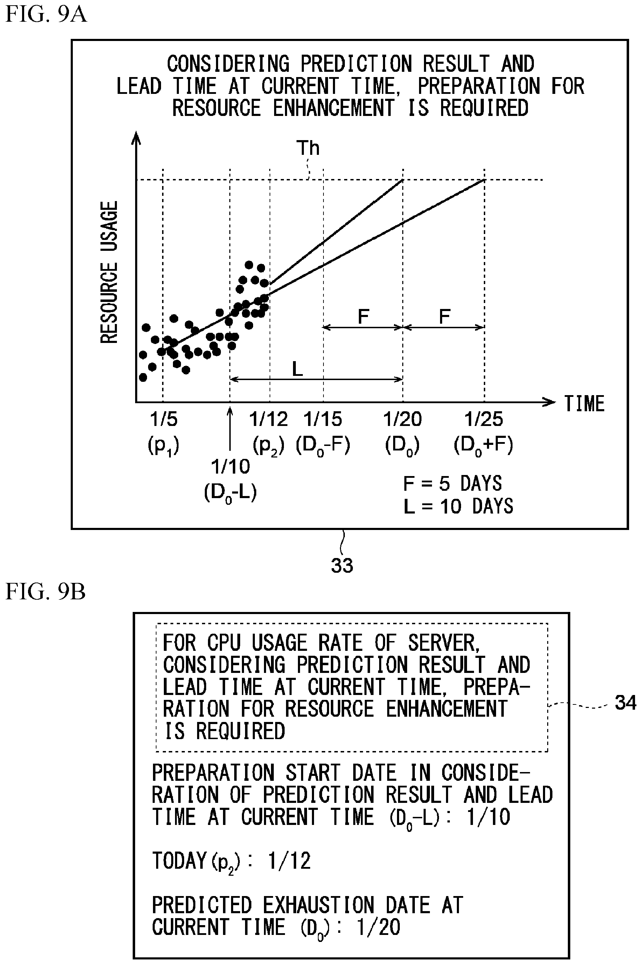

FIG. 9A is a schematic diagram illustrating a screen 33 indicative of the standard warning displayed by the display device 14.

In the example of FIG. 9A, a message "Considering current prediction result and lead time at current time, preparation for resource enhancement is required" is displayed on the display device 14 in addition to each of the dates Do, Do - L, Do - F and D₀ + F.

Further, the presentation unit 28 may notify the administrator of an email including the standard warning.

FIG. 9B is a diagram illustrating an example of a text of the email. In the example of FIG. 9B, a message 34 indicating the standard warning, and each of the dates p₂, Do and Do - L are included in the text of the email.

FIG. 7 is referred to again. On the other hand, when Do - L ≤ p₂ is not satisfied or when step S19 was already executed (NO in step S18), the process proceeds to step S20.

In step S20, the presentation unit 28 determines whether Do + F - L ≤ p₂ is satisfied and step S21 described later is not executed. The fourth predicted exhaustion date Do + F is the day when the resource exhaustion is predicted in the optimistic case, and the resource is almost certainly exhausted on the fourth predicted exhaustion date Do + F. Therefore, when Do + F - L ≤ p₂ is satisfied, even if the addition of the resource is decided at the current time, the resource is almost certainly exhausted by the time of the addition.

Therefore, when Do + F - L ≤ p₂ is satisfied and step S21 is not executed (YES in step S20), the process proceeds to step S21 and the presentation unit 28 outputs an instruction for displaying a final warning to the display device 14.

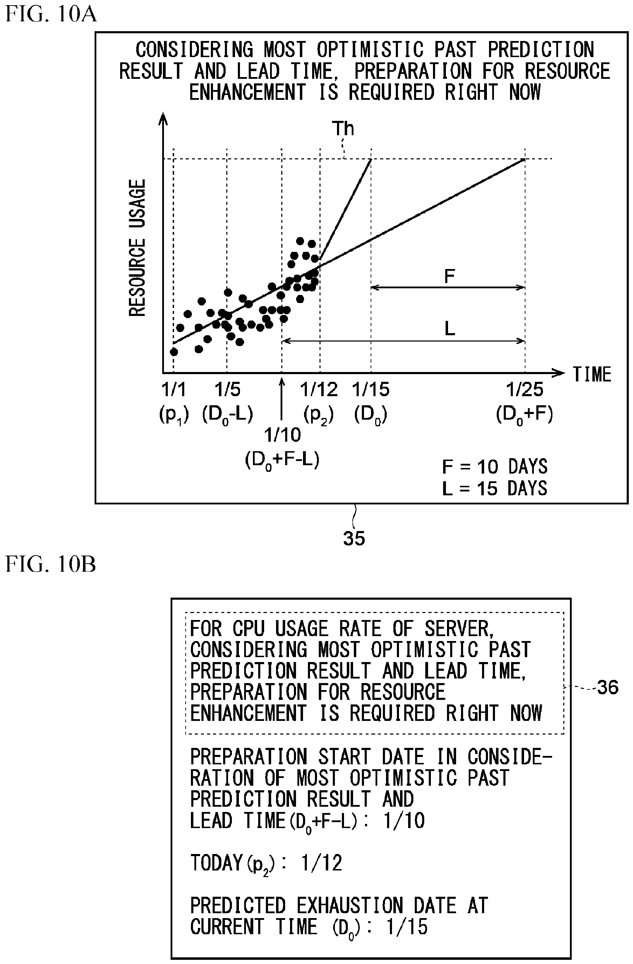

FIG. 10A is a schematic diagram illustrating a screen 35 indicative of the final warning displayed by the display device 14.

In the example of FIG. 10A, a message "Considering most optimistic past prediction result and lead time, preparation for resource enhancement is required right now" is displayed on the display device 14 in addition to each of the dates Do, Do + F - L, Do - F and Do + F.

Further, the presentation unit 28 may notify the administrator of an email including the final warning. FIG. 10B is a diagram illustrating an example of the text of the email. In the example of FIG. 10B, a message 36 indicating the final warning, and each of the dates p₂, Do and Do + F - L are included in the text of the email.

After this, the process returns again to step S11 in FIG. 7. This completes a basic process of the method of calculating the predicted exhaustion date according to the present embodiment.

According to the present embodiment described above, the calculation unit 26 calculates the difference F due to the difference between the resource usages at respective time points p₁ and p₂ (step S14). Then, the presentation unit 28 presents to the administrator the third predicted exhaustion date Do-F in which the second predicted exhaustion date Do is corrected based on the difference F (step S15). Thereby, the administrator can know the third predicted exhaustion date D₀ - F that takes into account the daily fluctuation of the resource usage, and the administrator can add the server 11 and the network device 12 before the resource is exhausted.

Next, variations of the present embodiment will be described. In the example of FIG. 5, only the first predicted exhaustion dates D₁ and D₂ having the variation greater than the threshold value X among the first predicted exhaustion dates D₁ to D₆ are used to calculate the third predicted exhaustion date Do - F, thereby preventing the number of first predicted exhaustion dates from increasing unnecessarily.

Instead of this, the calculation unit 26 may calculate the first predicted exhaustion date as in each of the following variations.

### (Frist Variation)

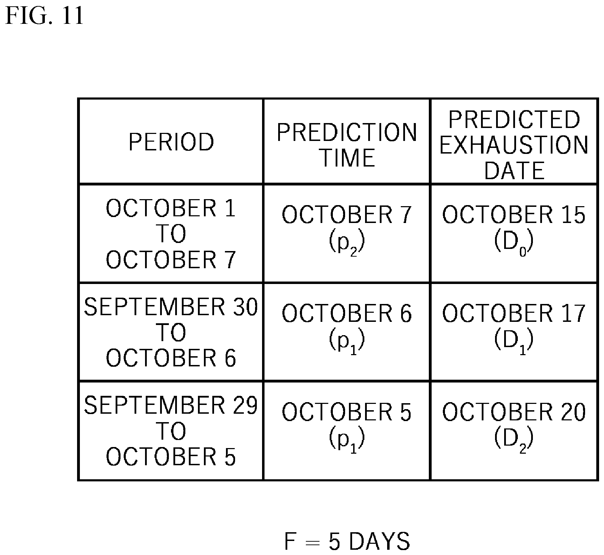

FIG. 11 is a diagram illustrating a method of calculating the predicted exhaustion date according to a first variation.

In this variation, the plurality of first time points p₁ (October 6 and October 5) are days that go back to a past day (October 5) that is separated from the second time point p₂ (October 7) by a predetermined number of days (2 days), wherein any one of the plurality of first time points p₁ (e.g. October 6) differ by one day from an another first time point (e.g. October 5). Further, 7 days is adopted as the period having the first time point p₁ as the end point, and 7 days is similarly adopted as the period having the second time point p2 as the end point.

In this case, the calculation unit 26 calculates October 15 as the second predicted exhaustion date Do based on the usage information 24 for a period from October 1 to October 7.

The calculation unit 26 calculates October 17 as the first predicted exhaustion date D₁ at the first time point p₁ (October 6) based on the usage information 24 for the period from September 30 to October 6. Similarly, the calculation unit 26 calculates October 20 as the first predicted exhaustion date D₂ at the first time point p₁ (October 5) based on the usage information 24 for the period from September 29 to October 5.

In this case, the largest difference between the first predicted exhaustion dates D₁ and D₂ and the second predicted exhaustion date Do is the first predicted exhaustion date D₂, and the difference F is 5 days. Therefore, the third predicted exhaustion date D₀ - F is October 10.

According to this, the calculation unit 26 calculates the first predicted exhaustion dates D₁ and D₂ only at the two first time points p₁ close to the second time point p₂. Therefore, the correction unit 27 can calculate the third predicted exhaustion date Do - F in consideration of only the fluctuation of the recent prediction result.

### (Second Variation)

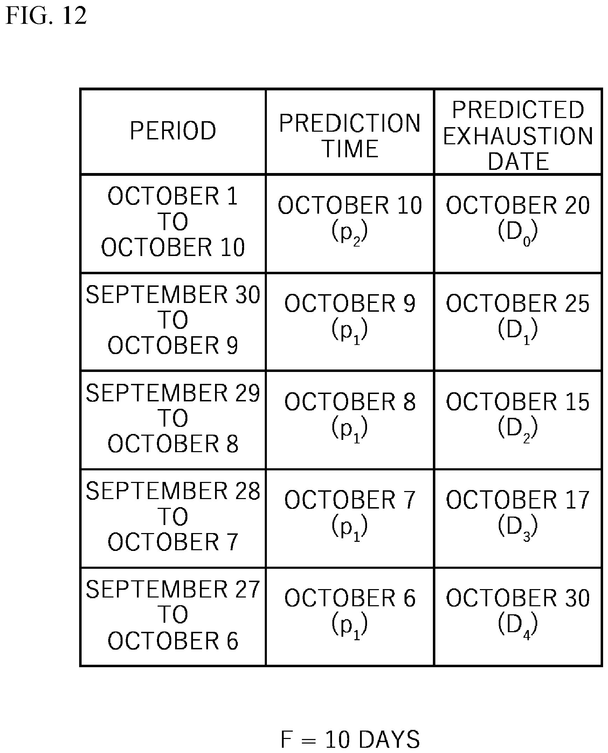

FIG. 12 is a diagram illustrating the method of calculating the predicted exhaustion date according to a second variation. Also in this variation, the plurality of first time points p₁ are set to different days from each other, as in the first variation. The period having the first time point p₁ as the end point is 10 days, and the period having the second time point p₂ as the end point is also 10 days.

In this variation, a ratio of the total number (5) of the plurality of first time points p₁ and the second time point p₂ to the number of days (10 days) included in the period is set to 1/2. The ratio is constant regardless of the total number of the plurality of first time points p₁ and the second time point p₂ and the number of days included in the period. This eliminates the need for the administrator of the system 10 to set the number of the plurality of first time points p₁.

In the example of FIG. 12, the difference F is 10, and the third predicted exhaustion date Do - F calculated by the correction unit 27 is October 10.

### (Third Variation)

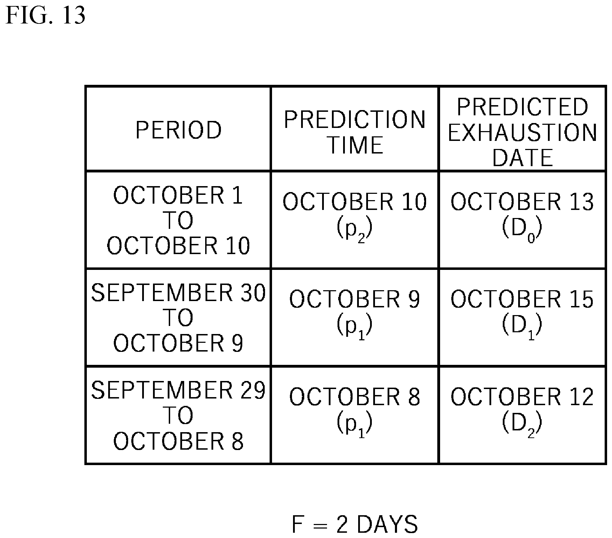

FIG. 13 is a diagram illustrating the method of calculating the predicted exhaustion date according to a third variation. Also in this variation, the plurality of first time points p₁ are set to different days from each other, as in the first variation. The period having the first time point p₁ as the end point is 10 days, and the period having the second time point p₂ as the end point is also 10 days.

Here, it is considered the case where the second predicted exhaustion date Do is October 13. In this case, the difference between the second predicted exhaustion date Do (October 13) and the second time point p₂ (October 10) is 3 days. In this variation, the total number of the first time points p₁ and the second time point p₂ is set to three, which is equal to the difference (3 days).

Thereby, the correction unit 27 can calculate the third predicted exhaustion date Do - F (October 11) in consideration of the first predicted exhaustion dates D₁ and D₂ at the first time points p₁ close to the second predicted exhaustion date Do.

### (Fourth Variation)

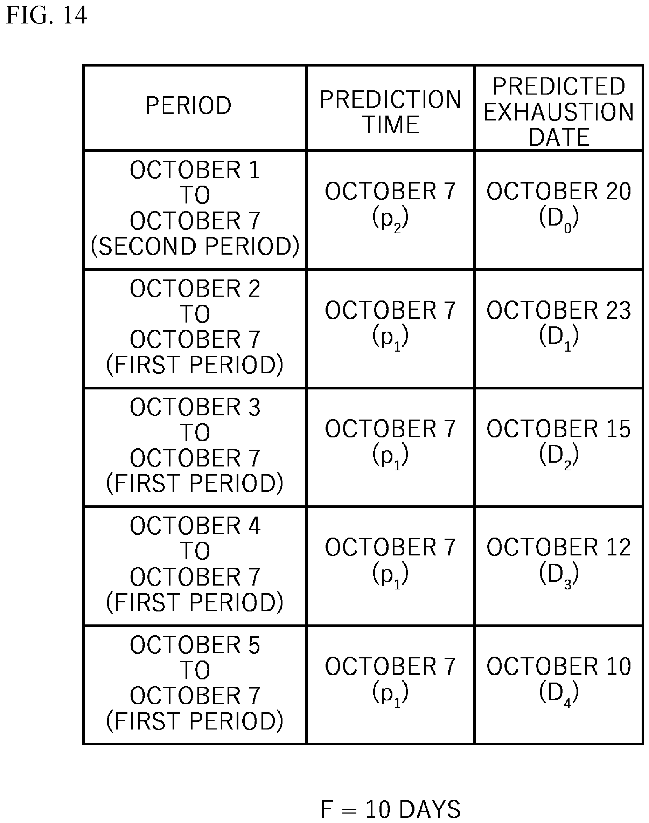

FIG. 14 is a diagram illustrating the method of calculating the predicted exhaustion date according to a fourth variation. In this variation, each of the plurality of first time points p₁ and the second time point p₂ is the same day (October 7), as illustrated in FIG. 14.

In this example, the calculation unit 26 calculates the first predicted exhaustion dates D₁ to D₄ based on the usage information 24 in a plurality of first periods having different lengths for the plurality of first time points p₁, respectively.

Furthermore, the calculation unit 26 calculates the second predicted exhaustion date Do (October 20) based on the usage information 24 in the second period having the second time point p₂ as the end point and having a different length from any of the plurality of first periods. In this variation, the difference F is 10, and the third predicted exhaustion date Do - F calculated by the correction unit 27 is October 10.

According to this, since the end points of the second period and each of the plurality of first periods are the second time point p₂, the resource usage at the latest second time point p₂ can be reflected in each of the predicted exhaustion dates Do to D₄. Moreover, since the lengths of the plurality of first periods are different from each other, the correction unit 27 can calculate the third predicted exhaustion date Do - F (October 10) in consideration of both long-term and short-term perspectives.

### (Fifth Variation)

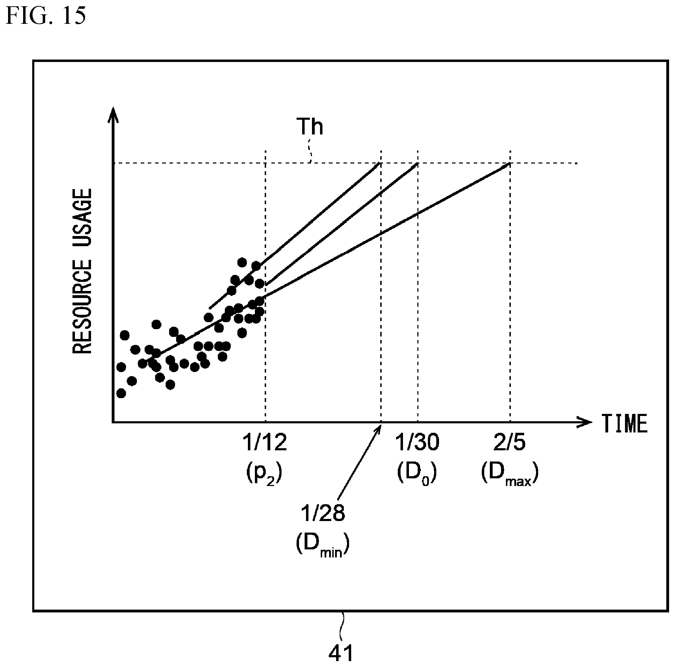

In this variation and subsequent variations, a screen presented by the presentation unit 28 will be described. FIG. 15 is a schematic diagram of a screen 41 according to a fifth variation. In this variation, the presentation unit 28 presents a maximum value Dₘₐₓ and a minimum value Dmin among the plurality of first predicted exhaustion dates D₁ to Dₙ on the screen 41. This allows the administrator of the system 10 to intuitively know the fluctuation of the predicted exhaustion date.

### (Sixth Variation)

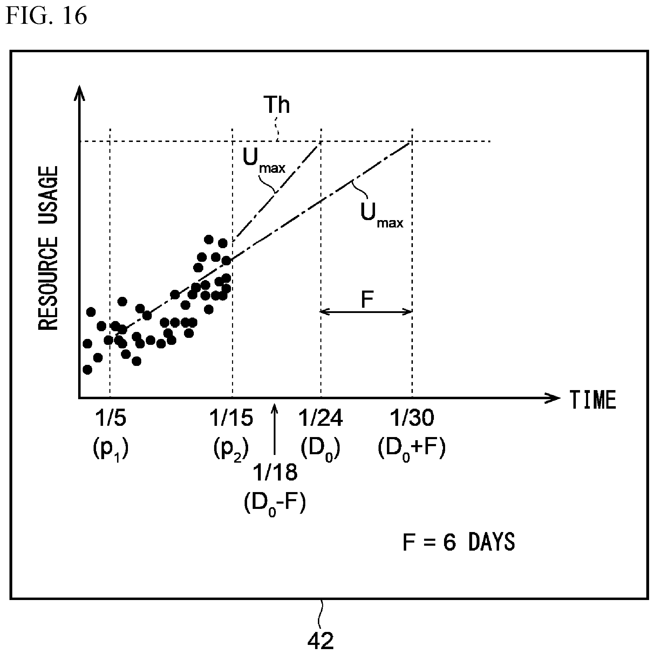

FIG. 16 is a schematic diagram of a screen 42 according to a sixth variation. In this variation, by using the same algorithm as in FIG. 2, the calculation unit 26 gives a range to the predicted value of the resource usage. Then, the calculation unit 26 calculates the second predicted exhaustion date Do using the maximum value Uₘₐₓ of the width. The maximum value Uₘₐₓ is the value at which the possibility of the resource exhaustion is 10% or more.

Further, the correction unit 27 calculates the third predicted exhaustion date Do - F and the fourth predicted exhaustion date Do + F using the maximum value Uₘₐₓ. After that, the presentation unit 28 presents the second predicted exhaustion date Do, the third predicted exhaustion date Do - F, and the fourth predicted exhaustion date Do + F on the screen 42.

When the maximum value Uₘₐₓ is used, each of the predicted exhaustion dates Do, Do ― F and Do + F is earlier than that in a case where the average value Uₐᵥₑ and the minimum value Uₘᵢₙ in FIG. 2 are used. Therefore, the administrator can make a decision to incorporate the server 11, the network device 12 and the like into the system 10 at an early stage, and can prevent a fatal consequence such as the shutdown of the system 10 due to the resource exhaustion.

### (Seventh Variation)

FIG. 16 is a schematic diagram of a screen 43 according to a seventh variation.

In this variation, by using the same algorithm as in FIG. 2, the calculation unit 26 gives a range to the predicted value of the resource usage. Then, the calculation unit 26 calculates the second predicted exhaustion date Do using the minimum value Uₘᵢₙ of the width. The maximum value Uₘᵢₙ is the value at which the possibility of the resource exhaustion is 90% or more.

Further, the correction unit 27 calculates the third predicted exhaustion date Do - F and the fourth predicted exhaustion date Do + F using the minimum value Uₘᵢₙ. After that, the presentation unit 28 presents the second predicted exhaustion date Do, the third predicted exhaustion date Do - F, and the fourth predicted exhaustion date Do + F on the screen 43.

When the minimum value Uₘᵢₙ is used, each of the predicted exhaustion dates Do, Do - F and Do + F is later than that in a case where the average value Uₐᵥₑ and the maximum value Uₘₐₓ in FIG. 2 are used. Therefore, the seventh variation is effective when it is possible to deal with the resource exhaustion by a method different from incorporating the server 11, the network device 12 and the like into the system 10.

### (Hardware Configuration)

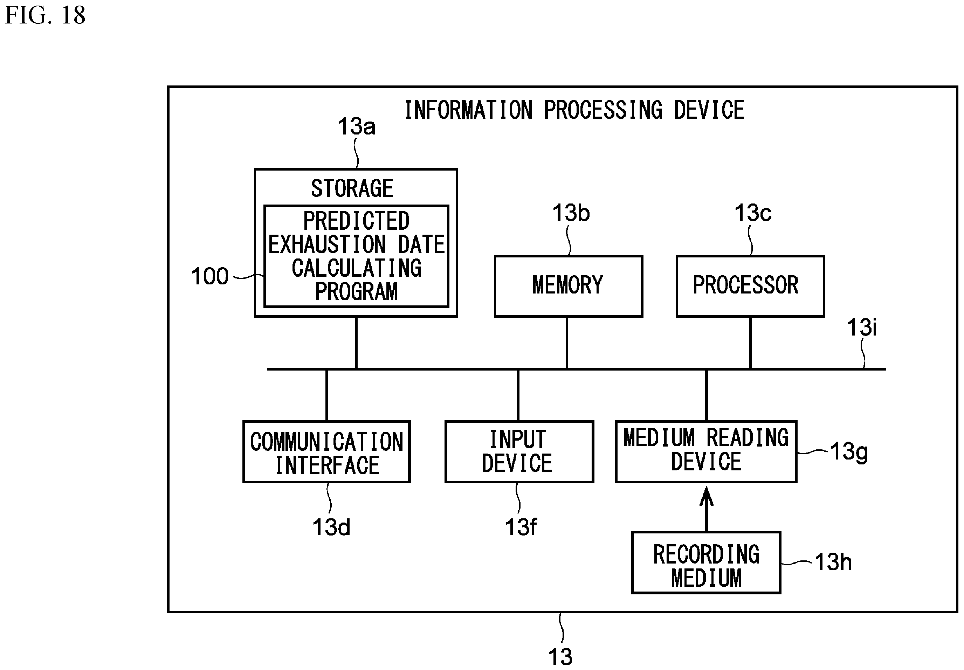

FIG. 18 is the block diagram illustrating the hardware of the information processing device 13. As illustrated in FIG. 18, the information processing device 13 includes a storage 13a, a memory 13b, a processor 13c, a communication interface 13d, an input device 13f and a medium reading device 13g. These elements are connected to each other by a bus 13i.

The storage 13a is a non-volatile storage such as an HDD (Hard Disk Drive) or an SSD (Solid State Drive), and stores a predicted exhaustion date calculating program 100 according to the present embodiment.

The predicted exhaustion date calculating program 100 may be recorded on a computer-readable recording medium 13h, and the processor 13c may read the predicted exhaustion date calculating program 100 from the recording medium 13h via the medium reading device 13g.

Examples of such a recording medium 13h include physically portable recording media such as a CD-ROM (Compact Disc-Read Only Memory), a DVD (Digital Versatile Disc), and a USB (Universal Serial Bus) memory. Further, a semiconductor memory such as a flash memory, or a hard disk drive may be used as the recording medium 13h. The recording medium 13h is not a temporary medium such as a carrier wave having no physical form.

Further, the predicted exhaustion date calculating program 100 may be stored in a device connected to a public line, the Internet, a LAN (Local Area Network), or the like. In this case, the processor 103 may read and execute the predicted exhaustion date calculating program 100.

Meanwhile, the memory 13b is hardware that temporarily stores data, such as a DRAM (Dynamic Random Access Memory), and the predicted exhaustion date calculating program 100 is deployed on the memory 13b.

The processor 13c is hardware such as a CPU (Central Processing Unit) or a GPU (Graphical Processing Unit) that controls each element of the information processing device 13. Further, the processor 13c executes the predicted exhaustion date calculating program 100 in cooperation with the memory 13b.

Thus, the processor 13c executes the predicted exhaustion date calculating program 100 in cooperation with the memory 13b, so that the control unit 23 of the information processing device 13 (see FIG. 6) is realized. The control unit 23 includes the acquisition unit 25, the calculation unit 26, the correction unit 27, and the presentation unit 28.

The storage unit 22 (see FIG. 6) is realized by the storage 13a and the memory 13b.

Further, the communication interface 13d is hardware such as a NIC (Network Interface Card) for connecting the information processing device 13 to the network 15 (see FIG. 3). The communication unit 21 (see FIG. 6) is realized by the communication interface 13d.

The input device 13f is hardware such as a keyboard and a mouse for the administrator of the system 10 to input various data to the information processing device 13.

The medium reading device 13g is hardware such as a CD drive, a DVD drive, and a USB interface for reading the recording medium 13h.

Although the embodiment of the present invention is described in detail, the present invention is not limited to the specifically described embodiments and variations but other embodiments and variations may be made without departing from the scope of the claimed invention.

## Claims

1. A method of calculating a predicted exhaustion date for causing a computer to execute a process, the process comprising:
calculating a first predicted exhaustion date (Di) when a resource in a system is predicted to be exhausted, at a first time point (pi);
calculating a second predicted exhaustion date (Do) when the resource is predicted to be exhausted, at a second time point (p₂) after the first time point;
calculating a difference (F) between the first predicted exhaustion date and the second predicted exhaustion date;
calculating a third predicted exhaustion date (Do - F) by correcting the second predicted exhaustion date based on the difference; and
presenting the third predicted exhaustion date.

2. The method of calculating the predicted exhaustion date as claimed in claim 1, wherein
the calculating the first predicted exhaustion date is calculating a plurality of first predicted exhaustion dates at a plurality of first time points different from each other, respectively, and
the correcting is performed using a largest value among a plurality of differences between the plurality of first predicted exhaustion dates and the second predicted exhaustion date.

3. The method of calculating the predicted exhaustion date as claimed in claim 2, wherein
the plurality of the first predicted exhaustion dates are calculated based on parameters indicating a usage of the resource in a plurality of periods having the plurality of first time points as end points, and
the second predicted exhaustion date is calculated based on the parameter for a period having the second time point as an end point.

4. The method of calculating the predicted exhaustion date as claimed in claim 2, wherein
each of the plurality of first time points is a day that goes back to a past day that is separated from the second time point by a predetermined number of days, wherein any one of the first time points differ by one day from an another first time point.

5. The method of calculating the predicted exhaustion date as claimed in claim 2, wherein
a total number of the plurality of the first time points and the second time point is equal to a number of days corresponding to a difference between the second predicted exhaustion date and the second time point.

6. The method of calculating the predicted exhaustion date as claimed in claim 2, wherein
the plurality of the first time points are the same day as the second time point,
the plurality of first predicted exhaustion dates are calculated based on the parameters indicating a usage of the resource in a plurality of first periods having the plurality of first time points as end points, respectively, the plurality of first periods having different lengths for each of the first time points, and
the second predicted exhaustion date is calculated based on the parameter in a second period having the second point as an end point, the second period being different in length from any of the plurality of first periods.

7. The method of calculating the predicted exhaustion date as claimed in claim 2, wherein
the difference between the first predicted exhaustion date and the second predicted exhaustion date is calculated, the first predicted exhaustion date having a variation larger than a threshold value among the plurality of first predicted exhaustion dates.

8. The method of calculating the predicted exhaustion date as claimed in claim 2, wherein
a maximum value and a minimum value of a plurality of the first predicted exhaustion dates are presented.

9. A program of calculating a predicted exhaustion date that causes a computer to execute a process, the process comprising:
calculating a first predicted exhaustion date (Di) when a resource in a system is predicted to be exhausted, at a first time point (pi);
calculating a second predicted exhaustion date (Do) when the resource is predicted to be exhausted, at a second time point (p₂) after the first time point;
calculating a difference (F) between the first predicted exhaustion date and the second predicted exhaustion date;
calculating a third predicted exhaustion date (Do - F) by correcting the second predicted exhaustion date based on the difference; and
presenting the third predicted exhaustion date.
